**Europäisches Patentamt**

(19) **European Patent Office**

**Office européen des brevets**

(11) Publication number : **0 383 402 B1**

## (12) EUROPEAN PATENT SPECIFICATION

(45) Date of publication of patent specification :
**23.12.92 Bulletin 92/52**

(51) Int. Cl.⁵ : **F24F 3/16, B01D 46/00, B01D 46/12**

(21) Application number : **90200332.6**

(22) Date of filing : **14.02.90**

(54) **Device for keeping a space dust poor and clean room provided with such a device.**

(30) Priority : **17.02.89 NL 8900390**

(43) Date of publication of application :
**22.08.90 Bulletin 90/34**

(45) Publication of the grant of the patent :
**23.12.92 Bulletin 92/52**

(84) Designated Contracting States :
**AT BE CH DE DK ES FR GB IT LI LU NL**

(56) References cited :
**EP-A- 0 062 719**
**PATENT ABSTRACTS OF JAPAN, vol. 11, no.**
**330 (M-636)[2777], 28th October 1987, page 105**
**M 636 ; & JP-A-62 112 941(MATSUSHITA SEIKO**
**CO., LTD) 23-05-1987**

(56) References cited :
**PATENT ABSTRACTS OF JAPAN, vol. 10, no.**
**238 (M-508)[2294], 16th August 1986, page 117**
**M 508 ; & JP-A-61 70 332 (SANKI ENG.CO., LTD)**
**11-04-1986**

(73) Proprietor : **B.V. CLEAN AIR TECHNIEK**
**Kuipersweg 37**
**NL-3449 JA Woerden (NL)**

(72) Inventor : **Bianchetti, Rudi**
**Prof. Bronkhorstlaan 13**
**NL-3451 ER Vleuten (NL)**

(74) Representative : **de Wit, Gerard Frederik, Ir. et**
**al**
**Octrooi- en Merkenbureau De Wit B.V.**
**Breitnerlaan 146**
**NL-2596 HG Den Haag (NL)**

# Description

The invention relates to a device for maintaining a space dust poor having an open side and at the side opposite to said open side a wall filter and a channel space located at the side of the wall filter turned away from the space, the channel space being connected to an air inlet via compressor means.

Such devices are known in several forms wherewith it is important that in the space a stream pattern is maintained with which no unfiltered air can attain the inside of the space.

In EP-A-0.062.719 a device of the indicated type is shown in which as an additional means to prevent entrance into the space of unfiltered air the air velocity towards the open side is varied along one direction of the said open side in order to adapt the stream pattern to any obstacles in the space.

In an article of J.Donderwinkel in "De Ingenieur", number 7/8, 1988, page 7-13 a survey has been given of possible filters and classifications of dust poor air and the circulation maintained in a so-called clean room.

Therein is also indicated in which degree the importance of keeping down dust particles increases for instance for micro electronics, but also with other applications in the biology, medical science and pharmacy to mention a few time and time again the importance appears to clean air from dust particles. The particles may be bacteria or bacteria colonies or dust particles of medicines which may be dangerous to people working with them.

Further the requirements to be fulfilled by dust poor air become continually more severe. So nowadays for manufacturing micro electronics the requirement is set that class 10 has to prevail, which means that 10 particles per $ft^3$ may be present. Because, however, it has appeared that time and time again smaller particles may be present for a certain class a function exists which has to be fulfilled such that always less particles of a predetermined diameter have to be present than the function indicates. In the mean time for many applications it has appeared that the larger particles do most harm, for instance in the micro electronics, in which they may cause a connection between two adjacent components or in bacteriology in which a bacterium or a bacterial colony has predetermined minimum dimensions.

Also a strong development of filters has occurred which provided a filtering in which the filtered air fulfils predetermined exigences. For instance the so-called HEPA filter lets not pass more than 0,003% of the particles having a diamter of 0,3 μm or more. In the mean time filters have been developed which stop considerably more particles of considerably smaller dimensions.

In practice it has appeared that very many particle sources exist of which man is a serious one, and that for that reason with keeping an open space dust poor, it is especially difficult to fulfil severe exigences , for instance that no particles are present which could damage micro electronics.

A further consideration is, that such a device per se could disturb the stream in a so-called clean room (this is the generally used term for a dust poor room), wherewith also attention should be paid to the way in which any current outside the device can cooperate with the means which keep the space itself dust poor.

Patent Abstract of Japan (vol. 11 no. 330,(M636) [2777], 28th October 1987, page 105 M 636; & JP-A-62 112 941 describe a device for maintaining a space dust poor having an open side and at the side opposite said open side an air pervious wall, a channel space being located at the side of the wall turned away from the space, said channel space being connected to a filter and via compressor means to an air inlet, compressor means connecting an air inlet to a further channel space connected to a filter having a vertical air exit giving a downwardly directed air flow adjacent the side of said space which is opposite to said air pervious wall, said air inlet being located below the lower side of said space.

With this known device still the possibility exists that turbulences will bring dust particles into the dust poor space, especially because no smooth combination of air flows from the two filters is made sure for the space below a top plate, whereas the space above this plate is not accessible.

The invention aims to improve such a device in order to obtain a dust poor space which is accessible from the side opposite said channel space.

This aim is realized by providing the features of the characterizing clause of claim 1.

Taking into account the above the invention provides a specially effective device with a dust'poor space having an opening. Accordingly the invention consists in that a further filter with at the open side a downwardly directed output surface and at its side turned away from said surface adjoins a further channel space which via compressor means is connected to a further inlet, the wall filter and the further filter having such stream resistances and the compressor means being adapted to generate such pressures in the channel space and the further channel space, that the air exit velocity from the further filter is higher than that from the wall filter, the inlet and the further inlet for the compressor means being located at the under side of the open side.

It is pointed to Patent Abstract of Japan, vol. 11 no. 330 (M636) [2777] of October 28, 1987, from which a clean zone unit is known having a working space with inlet means for filtered air at the back wall and the ceiling and a switching damper to control the air quantity fed to the back wall or the ceiling. Here, however, lack the features of the invention which provide an effective shield preventing room air to enter the space of the device.

Patent Abstracts of Japan, vol. 10, no. 238 (M-508) [2294] of August 16, 1986 shows a clean bench device having a feed of filtered air through the ceiling and the lower part of the back wall. Here no shielding occurs to prevent air from the room to enter the upper part of the space, for instance if swirls would occur.

With the invention the air volume leaving the further filter has a greater velocity than has the volume coming from the back wall filter and flowing transversely to it. This means that at the location where they meet some turbulences will occur. These turbulences will, however, not pass through the air shield issuing from the further filter. Further it is important that the air for both filters is sucked in below the opening, by reason of which the air shield together with air from the wall filter added to it, at least an important part thereof, is sucked away at the lower side which keeps the air curtain also closed at the lower side. Moreover in this way the air can be replaced by air from outside the space, at least partially, which gives an important heat dissipation possibility, for instance when cooling down electronic chips of semiconducter material coming from a diffusion furnace. Further the small turbulences occurring at the surface where both air currents meet have a cleaning action for such like chips.

According to a further elaboration of the invention it is preferably provided that the inlet and the further inlet are located beside each other and that the compressor means are formed by a first compressor unit connected to the channel space and a second compressor unit connected to the further channel space. In this way easily two pressures can be obtained without the need of throttles or the like, which give raise to energy loss and could lead to noise hindrance, be it a light one. Moreover in this way it is obtained, that, if one of the compressors fails the other remains active and then still gives some protection of the objects in the space, be it that this protection is less than desired. Nevertheless it gives a time gain with a drop out which may be of great importance.

According to a further elaboration of the invention it is provided that the inlet is divided into two parts besides the further inlet, located between them and that the first compressor unit consists of two compressors which each compresses the air originating from the inlet or the further inlet respectively. Herewith it is attained that a number of inlets are located besides each other along the lower side of the openings, wherewith a still more complete equality of the air suction stream is obtained by providing according a further characteristic of the invention that the inlet or inlets extend over the length of the under side of the open side.

In order to lengthen the life time of the filters it is preferably provided that the air sucked in through the inlet or inlets is prefiltered. Though an inventive device often is placed in a so-called clean room and for that reason only little particles will be present which will be catched by a pre-filter (a normal prefilter catches for instance 98% of the particles larger than 5μm) it has nevertheless appeared that herewith the time of use of the filters can be prolonged.

When applying the invention further the problem occurs that at the end of the opening, also at its left and right side, disturbances in the stream pattern may occur. Practice has shown that the negative results hereof can be countered to a considerable degree by providing that the side wall delimitations extend to the forward edge of the further filter.

An inventive device is preferably placed in a so-called clean room, that is to say a space with a current which is only very little turbulent and on base of American terminology often is called a laminair current, which is not quite correct. Therewith two systems exist, namely the cross system, in which air is fed in through a vertical wall and then moves horizontally through the room, and the pattern with down flow, in which air is regularly fed in from the ceiling and is exhausted through the floor or near to the floor.

The latter flow pattern is most suitable to apply the invention in it. Then no air is sucked off at relatively great height above the floor, so that also no disturbances in the general flow pattern will occur for this reason, whereas the current leaving the further filter flows in the direction of the general current. Then a deviation of the current will occur near the floor, it is true, but this deviated current does not reach anymore the space to be kept dust poor.

Accordingly another embodiment of the invention provides a dust poor room with air down flow, in which a space is to be kept specially dust poor with an own air filtering and circulation system having an opening at one side, which is characterized in that the air filtering and circulation system is adapted to suck in air below said opening to compress it, filter it and feed it with a first pressure to wall filters in a wall opposing said opening and with such a pressure to a further filter located above the opening and having a downwardly directed exit surface, that the stream exit velocity from the further filter is higher than that from the wall filter.

A special application hereof is formed by the mechanism for feeding semi-conductor chips into a furnace in which they have to be heated, for instance to be submitted to a diffusion treatment. When such chips leave the furnace they have a very high temperature which may give rise to a considerable convection current. In that instance the invention is specially effective, because at the one hand it is prevented that the convection current can lead to it that non-filtered air is sucked in from the space in which the device is located and at the other hand that by reason of the circulation of air which is refreshed to a considerable degree a good heat removal is obtained. Therewith it has appeared that the turbulence which can occur at the border of both air currents may be favourable for removing dust particles from semi conductor chips cooling down.

The invention in the following is further elucidated on hand of the drawing, in which

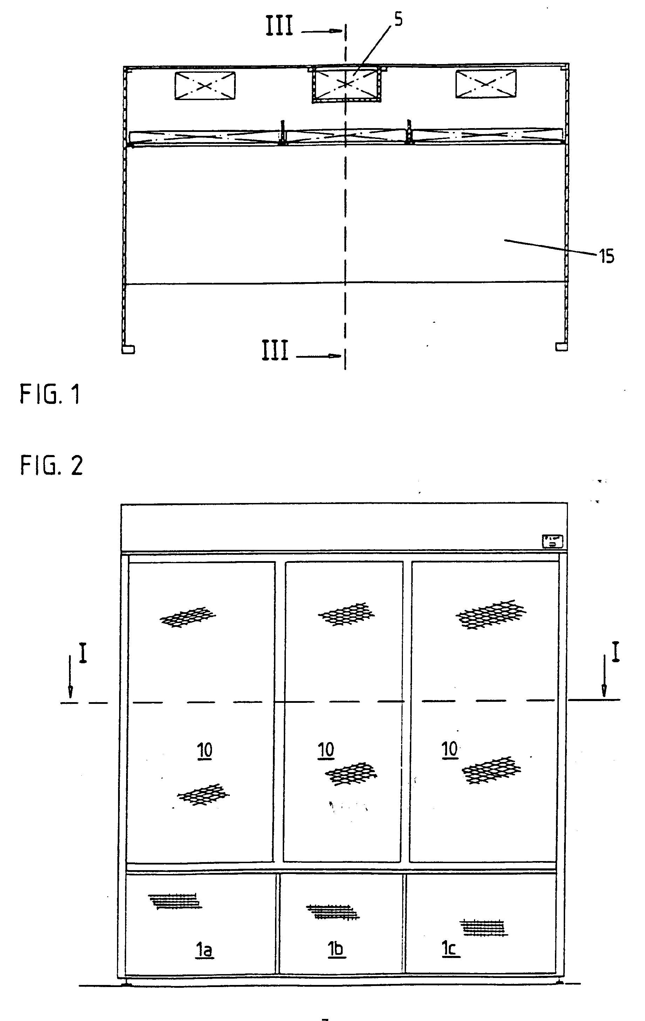

figure 1 is a horizontal cross-section through an inventive device over the line I - I of fig. 2;

figure 2 is a front view of an inventive device;

figure 3 is a cross-section over the line III - III of fig.1; and

figure 4 is a perspective view of the device of fig. 1-3.

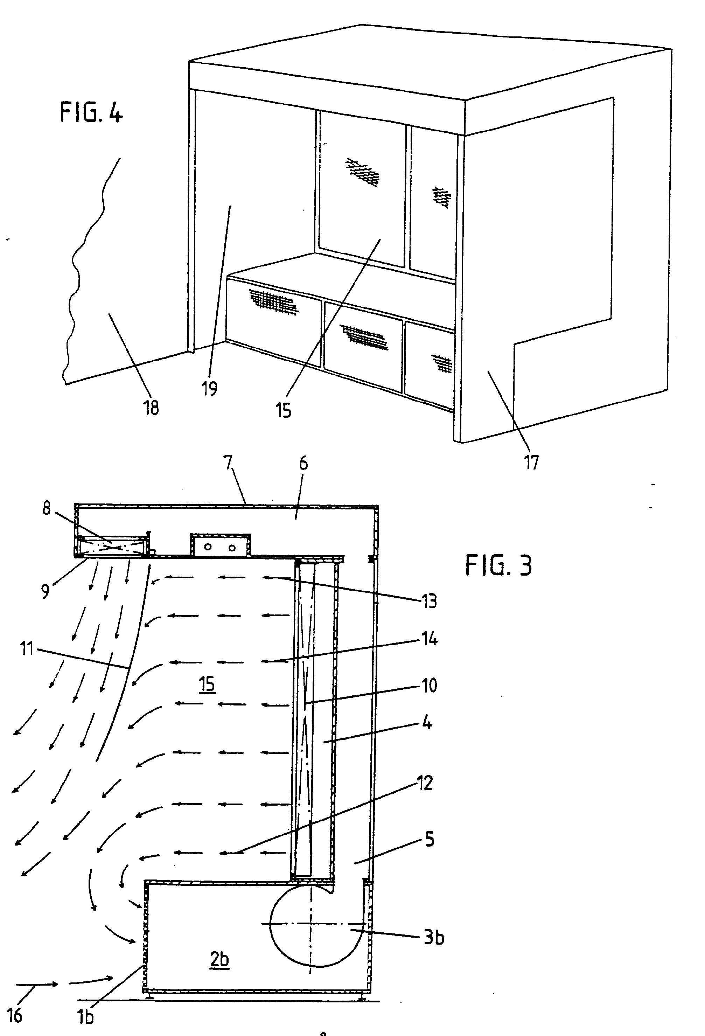

In the drawing an inventive device has been shown with three inlets with prefilters 1a, 1b and 1c, which at the back side have a chamber 2 of which 2b is visible in fig. 3 with each a fan or compressor 3, of which 3b is visible in fig. 3, the exit of the fans behind 1a and 1c being connected to a channel space 4, which is limited by filters with a high filtering activity, such as a so-called HEPA (High Efficiency Particle Air)-filter, which retains 99,997% of the particles having a diameter of 0,3 $\mu$m or more. The space behind prefilter 1b is connected to a channel 5 which runs upwardly along the back wall of the device and debouches in a channel 6 running along the ceiling 7 in which at the front side a HEPA filter 8 is mounted, the exit plane of which is directed downwardly.

At its front side the space 4 is delimited by three vertically mounted HEPA filters 10, connected in parallel and fed by fans positioned behind the pre-filters 1a and 1c. The rotational speed of these fans is adjusted in such a way that the air current leaving the filters 10 has a velocity of about 0,45 m/sec.

The fan 3b located behind pre-filter 2b rotates with such a speed that the air current leaving the filter 8 in vertically downward direction has a velocity of about 0,55 m/sec.

By reason hereof a stream pattern is generated which roughly has been indicated in fig. 3.

Therewith the border line between the vertical current leaving 8 and the horizontal current leaving 10 has been indicated with a line 11, which at its lower end has not been continued, because there the division between the vertical and horizontal air currents has almost vanished. The reason hereof is, that these currents hit each other with a velocity difference and in different directions. Of course a stream pattern will be built up in which no sudden directional changes occur, but the current will be curved such like that they will have practically the same direction at their division. Yet some small turbulences occur which cause some mixing of the currents.

Furter 12 indicates a current followed by air leaving the lower parts of filters 10. The air is located in a practically turbulence free, may it be curved stream pattern and attains the upper side of the filters 1a, 1b and 1c. Also higher up current trajectories, such as 13 and 14 have practically no turbulence in the space 15 in which the concentration of particles is kept as low as possible.

On the other hand part of the air current from filter 8 and also part of the air current from filter 10 is removed and via trajectories 16 fresh air is fed to the pre-filters 1a, 1b and 1c.

In order to counter air leaks at the side ends of the device wall prolongations 17 have been applied. Experience has shown that with a device as depicted the particle concentration in space 15 may be 1 or 2 magnitudes (that is $10^{-1}$ of $10^{-2}$ times) lower than in the room in which the device is located.

An important application of the invention is the case, that it contains a feed and discharge device, which by the way is known per se, for a diffusion furnace for semi-conductor chips, which have to be exposed to a heat treatment till for instance 900° C during a considerable time. In that instance the one side wall prolongation 17 preferably is part of a schematically indicated wall 18, which delimits the down flow clean room in which the device is located with a diffusion furnace known per se behind this wall 18. Through closable holes in the side wall 19 then supports with semiconductor chips known per se can be shoved into the furnace, been heat treated there and again shoved out of the furnace. This technic is known per se and will not further be discussed here.

When the chips with their supports of very high temperature are again received in space 15 and have to cool down there, their high temperature will give rise to relatively strong convection currents. It has appeared that the invention device allows these convection currents to leave space 15 without direct air intake from outside the space into the space 15. Moreover in this way a sufficient heat removal can be obtained via the discharged air.

Also in other applications wherewith in space 15 itself air movement is generated, for instance by test animals, the invention appears very effective in impeding entrance of air which has not passed one of the filters 8 or 10.

A further advantage of the invention is, that in a down flow clean roon a vertical air current with a velocity of about 0,45 m/sec. prevails, which is a relatively small difference of air velocity with the velocity of the air leaving filter 8, which may be for instance 0,55 m/sec. The current velocity of the air leaving horizontally filters 10 is for instance 0,45 m/sec. By reason hereof the air current in the clean room is only disturbed to a minimum degree, which would, however, have been far more serious if the air for filters 8 and 10 would have been sucked in at the upper side.

## Claims

1. Device for maintaining a space (15) dust poor having an open side and at the side opposite said open side an air pervious wall (10), a channel space (4) being located at the side of the wall turned away from the space (15), said channel space (4) being connected to a filter and via compressor means (3a,3c) to an air inlet (1a,1c), compressor means (3b) connecting an air inlet (1b) to a further channel space (5,6) connected to a filter (8) having a vertical air exit (9) giving a downwardly directed air flow adjacent the side of said space which is opposite to said air pervious wall (10), said air inlet (1a,1b,1c) being located below the lower side of said space (15), **characterized** in that said pervious wall (10) is the exit surface of a wall filter (10) and in that the filter (8,10) have such stream resistances and the compressor means (3a,b,c) are adapted to generate such pressures, that the air exit velocity from the further filter (8) is higher than that from the wall filter (10).

2. Device according to claim 1, characterized in that the inlet (1a, 1c) and the further inlet (1b) are located besides each other and that the compressor means are formed by a first compressor unit (2a, 2c) connected to the channel space (4) and a second compressor unit (2b) connected to the further channel space (5, 6).

3. Device according to claim 1, characterized in that the inlet is divided into two parts (1a, 1c) besides the further inlet (1b), located between them and that the first compressor unit consists of two compressors which each compresses the air originating from the inlet or the further inlet respectively.

4. Device according to any of the preceding claims, characterized in that the inlet or inlets extend over the length of the under side of the open side.

5. Device according to any of the preceding claims, characterized in that the air sucked in through the inlet or inlets is prefiltered.

6. Device according to any of the preceding claims, characterized in that the side wall delimitations extend to the forward edge of the further filter (8).

7. Dust poor room with air down flow, in which a device according to any of the preceding claims is present to maintain a space (15) specially dust poor.

8. Dust poor room according to claim 7 for filling a loading device for a diffusion furnace for treating semi-conductor chips, a side wall of the space being provided with closable openings to let pass chip containers towards the furnace, characterized in that the furnace is located outside the room and that the said side wall of the space is part of the wall of said room.

**Revendications**

1. Dispositif pour maintenir un espace (15) dépoussiéré ayant une face ouverte et sur la face opposée à ladite face ouverte une paroi perméable à l'air (10), un espace de canal (4) étant disposé sur la face de la paroi orientée dans la direction opposée à l'espace (15), ledit espace de canal (4) étant relié à un filtre, et par l'intermédiaire d'un moyen compresseur (3a, 3c) à une arrivée d'air (1a, 1c), un moyen compresseur (3b) reliant une arrivée d'air (1b) à un autre espace de canal (5, 6) relié à un fil (8) ayant une sortie d'air verticale (9) qui établit un flux d'air dirigé vers le bas, adjacent à la face dudit espace qui est opposée à ladite paroi perméable à l'air (10), ladite arrivée d'air (1a, 1b, 1c) étant située sous la face inférieure dudit espace (15), caractérisé en ce que ladite paroi perméable (10) est la surface de sortie d'un filtre de paroi (10) et en ce que le filtre (8, 10) comporte des résistances s'opposant à la circulation et en ce que les moyens compresseurs (3a, b, c) sont conçus pour créer des pressions telles que la vitesse de sortie de l'air du second filtre (8) est supérieure à la vitesse de sortie du filtre de paroi (10).

2. Dispositif selon la revendication 1, caractérisé en ce que l'arrivé (1a, 1c) et l'autre arrivée (1b) sont disposées côte à côte et en ce que les moyens compresseurs sont formés par une première unité de compresseur (2a, 2c) relié à l'espace de canal (4), et par une seconde unité de compresseur (2b) reliée à l'autre espace de canal (5, 6).

3. Dispositif selon la revendication 1, caractérisé en ce que l'arrivée est divisée en deux parties (1a, 1b) placées de chaque côté de l'autre arrivée (1b) et en ce que la première unité de compresseur comprend deux compresseurs qui compriment chacun l'air provenant de la première arrivée ou de l'autre arrivée respectivement.

4. Dispositif selon l'une quelconque des revendications précédentes, caractérisé en ce que l'arrivée ou les arrivées s'étendent sur la longueur de la face inférieure de la face ouverte.

5. Dispositif selon l'une quelconque des revendications précédentes, caractérisé en ce que l'air aspiré à travers l'arrivée ou les arrivées est pré-filtré.

6. Dispositif selon l'une quelconque des revendications précédentes, caractérisé en ce que les délimitations de la paroi latérale s'étendent jusqu'au bord avant de l'autre filtre (8).

7. Compartiment dépoussiéré avec circulation d'air vers le bas, dans lequel un dispositif selon l'une quelconque des revendications précédentes est installé pour maintenir un espace (15) particulièrement dépoussiéré.

8. Local dépoussiéré selon la revendication 7 pour remplir un dispositif de chargement destiné à un four de diffusion pour le traitement des puces de semi-conducteur, une paroi latérale du espace comportant des ouvertures qui se ferment et qui permettent de laisser passer des conteneurs de puces arrivant au four, caractérisé en ce que le four est située à l'extérieur du local et en ce que ladite paroi latérale dudit espace fait partie de la cloison dudit local.

**Patentansprüche**

1. Einrichtung zum Staubarmhalten eines Raums (15) mit einer offenen Seite und an der Seite gegenüber der genannten offenen Seite eine Luft durchlässige Wand (10), wobei ein Kanalraum (4) an der Seite der Wand liegt, die vom Raum (15) abgewannt ist, der genannte Kanalraum (4) ist mit einem Filter und via Kompressionsmittel (3a,3c) mit einem Lufteinlass (1a,1c) verbunden, Kompressionsmittel (3b) verbinden einen Lufteinlass (1b) mit einem weiteren Kanalraum (5,6), der mit einem Filter (8) mit einem vertikalen Luftauslass (9) verbunden ist, der einen abwärts gerichteten Luftstrom in der Nähe der Seite des genannten Raums gibt, die gegenüber der Luft durchlässenden Wand (10) liegt, und der genannte Lufteinlass (1a,1b,1c) unter der Unterseite des genannten Raums liegt, dadurch gekennzeichnet, dass die genannte durchlässende Wand (10) die Austrittfläche eines Wandfilters (10) ist und dass die Filter (8,10) einen solchen Strömungswiderstand haben und die Kompressionsmittel (3a,b,c,) geeignet sind solche Drücke zu generieren, dass die Luftaustrittgeschwindigkeit des weiteren Filters (8) höher ist als die des Wandfilters (10).

2. Einrichtung nach Anspruch 1, dadurch gekennzeichnet, dass der Einlass (1a,1c) und der weitere Einlass (1b) neben einander liegen und dass die Kompressionsmittel von einer ersten Kompressionseinheit (2a,2c), die mit dem Kanalraum (4) verbunden ist und einer zweiten Kompressionseinheit (2b) die mit dem weiteren Kanalraum (5,6) verbunden ist, gebildet werden.

3. Einrichtung nach Anspruch 1, dadurch gekennzeichnet, dass der Einlass in zwei Teilen (1a,1c) geteilt ist, die neben dem weiteren Einlass (Ib) der zwischen ihnen liegt, gelegen sind und dass die erste Kompressionseinheit aus zwei Kompressoren besteht die je die vom Einlass bezugsweise vom weiteren Einlass kommende Luft komprimiert.

4. Einrichtung nach einem oder mehreren der vorangehenden Ansprüche, dadurch gekennzeichnet, dass der Einlass oder die Einlässe sich ausbreiten über die Länge der Unterseite der offenen Seite

5. Einrichtung nach einem oder mehreren der vorangehenden Ansprüche, dadurch gekennzeichnet, dass die durch den Einlass oder die Einlässe eingesaugte Luft vorfiltriert wird.

6. Einrichtung nach einem oder mehreren der vorangehenden Ansprüche, dadurch gekennzeichnet, dass die Begrenzungen der Seitenwand bis zur Vorderkante des weiteren Filters (8) reichen.

7. Staubarmer Raum mit abwärtsem Luftstrom, in welchem eine Einrichtung nach einem oder mehreren der vorangehenden Ansprüche anwesend ist um einem Raum (15) besonders staubarm zu halten.

8. Staubarmer Raum nach Anspruch 7 um eine Beladungseinrichtung für einen Diffusionsofen zur Behandlung von Halbleiterchips zu füllen, wobei eine Seitenwand des Raums mit verschliessbaren Oeffnungen versehen ist um Chipsbehälter zum Ofen durchzulassen, dadurch gekennzeichnet, dass der Ofen ausserhalb des Raums liegt und dass die genannte Seitenwand des Raums Teil der Wand des genannten Raums ist.

FIG. 1

FIG. 2

FIG. 4

FIG. 3